# EUROPEAN PATENT APPLICATION

(11) **EP 4 782 410 A1**
(43) Date of publication of application: **29.07.2026**
(21) Application number: 25714945.0
(22) Date of filing: 19.03.2025
(51) Int. Cl.: C02F 1/52, B01D 21/00, B01D 21/28, B01D 21/30, C02F 9/20, C02F 1/74, C02F 1/00

(54) **MINIATURIZED WATER TREATMENT STATION**

(30) Priority: 19.03.2024 PT 2024119331; 20.03.2024 PT 2024119334; 07.06.2024 PT 2024119517; 07.11.2024 EP 24211546
(71) Applicant: Ark - Indústria, Lda, 4430-059 Vila Nova de Gaia (PT)
(72) Inventor: AIRES PEREIRA COSTA, Nelson, 4430-059 VILA NOVA DE GAIA (PT)
(74) Representative: do Nascimento Gomes, Rui
(86) International application number: PCT/IB2025/052866
(87) International publication number: WO 2025/196654

(57) **Abstract**

The present disclosure falls within the technical area of miniaturized systems, in a laboratory and/or experimental context, defining a water treatment station. The station of the present disclosure and the elements contained therein are miniaturized when compared to large size plants, as are the water treatment plants included in major infrastructures. The station of the present solution permits, in an innovative way, to investigate and to treat contaminated water and to operate this treatment, in a miniaturised structure containing at least two reservoirs, wherein a first reservoir (B101) comprises at least one water inlet and one water outlet and a second reservoir (B102) comprises at least one water inlet and one water outlet, the water outlet being formed in a side section of the second reservoir (B102).

## Description

### FIELD OF DISCLOSURE

The present disclosure falls within the technical area of miniaturized systems, in a laboratory and/or experimental context, defining a water treatment station. The station of the present disclosure and the elements it contains are miniaturized when compared to large size plants, like water treatment plants, when they are part of major infrastructures.

### STATE OF THE ART

A number of solutions seeking to simulate the operation of water treatment plants for educational purposes are known in the state of the art.

These solutions simulate the operation of plants, including the elements that, for instance, pretend to represent contaminants, but which are not contaminants, consisting only of fictitious elements by which one tries to demonstrate how the treatment plants operate, generally within a learning context.

These systems are not functional and do not allow an effective treatment of water, at least no more than removing these fictitious elements from the water or showing, by other means, how a water treatment plant would operate. These plants do not allow for laboratory development and research.

Therefore, they do not require their components to work effectively to treat water in general.

The miniaturized station of the present solution allows to treat, test and control, in an efficient manner, new models for the treatment of contaminated water, in an innovative way, within an environment of scientifical development, research and learning.

### SUMMARY OF THE DISCLOSURE

The present disclosure includes a miniaturized water treatment station, such station including at least two reservoirs, suitable to contain liquids, a first reservoir and a second reservoir, wherein:
the first reservoir comprises at least one water inlet and one water outlet;
the second reservoir comprises at least one water inlet and one water outlet, the water outlet being formed on a side section of the second reservoir, and further comprising a residues outlet, the residues outlet being formed in a lower section of the first reservoir and being suitable for the removal of the residues deposited at least by gravitational action,
the water outlet in the first reservoir is connected to the water inlet of the second reservoir, and wherein the water outlet of the second reservoir is connected to a water outlet of the station,
the station comprises a first valve and a first pump, the first valve being controllable and allowing the water to flow out of the first reservoir, and the first pump being controllable, a pumping of the first pump being performed from the outlet of the first reservoir to the second reservoir (B102) through the water inlet of the second reservoir (B102), and the station further comprising a second valve, the second valve being controllable and allowing the water to flow out of the second reservoir through the second outlet and to the water outlet of the station, wherein each of the reservoirs has a capacity between 4 and 50 I.

The station may be configured such that the opening of the second valve occurs when the reaction of removing a contaminant in the water is finished and a resulting product has sedimented.

The station may additionally comprise a third valve, the third valve being controllable and allowing the residues deposited at the bottom of the second reservoir to exit through the residues outlet and into a residues outlet of the station.

The station may further be configured such that the opening of the third valve occurs after the opening of the second valve for the water treated for contaminants to flow out, after the removal reaction of a contaminant in water has finished and a resulting product has sedimented.

The station may additionally comprise a first drain outlet, and a fourth valve, the first drain outlet being connected to the outlet of the second reservoir, the fourth valve being controllable and allowing the water to flow from the first reservoir to the first drain outlet.

The water outlet may be formed in a lower section of the first reservoir.

The station may additionally comprise means to determine the water volume contained inside the first reservoir. Optionally, the means to determine the water volume inside the second reservoir may comprise a level sensor arranged at the outlet of the first reservoir and configured to determine the hydrostatic water pressure inside the second reservoir, establishing the water volume contained inside the first reservoir based on a hydrostatic water pressure value obtained by the level sensor.

The station may be configured to have the first pump pumping water according to at least a value obtained by the means used to determine the water volume inside the first reservoir.

The station may additionally comprise one flow meter, arranged between the first reservoir and the second reservoir, the first pump being configured to pump water according to at least one value obtained by the flow meter.

The station may additionally comprise an aeration pump arranged inside the second reservoir such that, when the water is inside the second reservoir, the air of the aeration pump contacts the water.

The station may further comprise a pH meter arranged inside the second reservoir, such that, when the water is inside the same, it is able to measure the pH of water.

The station may additionally comprise mechanical stirring means, controllable by electronic means and arranged inside the first reservoir as a facilitator for a chemical process to be performed inside the first reservoir. When an experiment was performed based on the station of the present disclosure, a chemical reagent is added to a solution of contaminated water inside the second reservoir, and the stirring means stir the mixture - in contact with the means inside the second reservoir -, promoting the chemical process (for instance, an oxidation chemical process), further permitting the optimization of the formation of residues resulting from the reaction at the bottom of the second reservoir.

The stirring means may be rotative, its rotation speed being controllable by electronic means. The stirring means can also have blades with a tilt between 35 a 55°, in relation to a rotation axis of the rotation means, such a tilt promoting the oxidation reaction and, consequently, the formation of the product resulting from the reaction.

The station may additionally comprise an overflow control member and a second drain outlet, and wherein the second reservoir comprises a third water outlet, the overflow control member is arranged inside the second reservoir and connected to the third water outlet such that, when the water inside the second reservoir reaches a predefined volume, it enters the overflow control member and exits through the third water outlet into the second drain outlet.

Each valve may be controllable by electronic means.

The first and second reservoirs may be installed in at least one bench, that bench being movable, optionally by means of wheels installed in a lower face of the bench.

The present disclosure does additionally comprise a water treatment method in the water treatment station of the present disclosure. The method comprises the following steps:
- add water, optionally demineralised water, in the first reservoir,
- open the water outlet in the first reservoir and pump water into the second reservoir,
- add at least one contaminant to the water pumped into the second reservoir, obtaining contaminated water,
- add at least one reagent to the contaminated water to obtain a mixture, the mixture thus inducing a reaction, as an oxidation-reduction reaction, and forming residues,
- wait for the deposition of residues resulting from the reaction at the bottom of the second reservoir,
- open the water outlet of the first reservoir and obtain water treated for contaminants at the water outlet of the station.

The method may comprise the step of residues discharge deposited in the lower section of the second reservoir, through the residues outlet of the station.

The method may additionally comprise the step of allowing, after the opening of the water outlet of the second reservoir and obtaining treated water for contaminants at the water outlet of the station, the discharge of residues deposited in the lower section of the second reservoir using the residues outlet of the station.

The method may still further determine the activation of the mechanical stirring means.

The method may additionally include the establishment of the water volume inside the first reservoir.

Optionally, the water volume inside the first reservoir may be obtained based on establishing the water hydrostatic pressure inside the first reservoir, e.g. based on a level sensor arranged at the outlet of the first reservoir.

The water pumping may be performed based on the established water volume inside the first reservoir.

The method may additionally include the determination of a water flow between the first reservoir and the second reservoir, and the pumping may be performed based on that determined flow rate.

The method may additionally include the activation of an aeration pump arranged inside the second reservoir such that, when the water is therein, the air contacts the water.

The station may additionally comprise one pH meter arranged inside the second reservoir such that, when the water is inside, it is able to measure the pH of the water.

### DESCRIPTION OF THE FIGURES

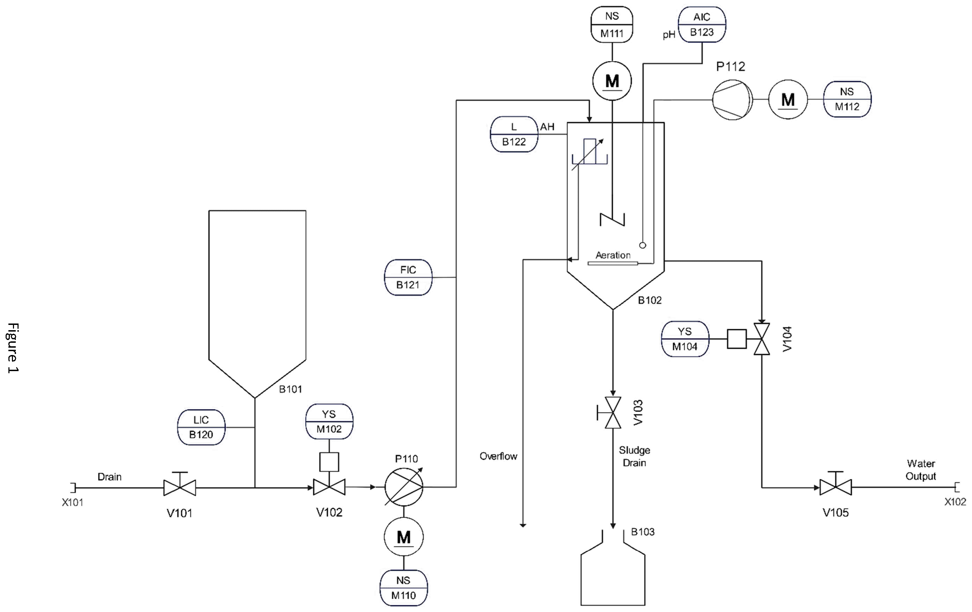

Figure 1 - a schematic representation of a station according to the present disclosure. The station comprises a first reservoir (B101), the outlet of which is connected to a level sensor (B120), a first valve (V102) and a fourth valve (V101). The fourth valve (V101) allows the water inside the first reservoir (B101) to flow towards one first drain outlet (X101). Demineralised water may be added to the first reservoir as a solid and neutral basis for the experiments to be performed. The first valve (V102) allows the demineralised water in the first reservoir to exit the first reservoir (B101) through the outlet thereof, in the amount and depending on the level sensor (B120), such water being likely to be pumped by the first pump (P110) into the second reservoir (B102), controlled and quantified by means of a flow meter (B121). In the second reservoir (B102), when a contaminant is added, as a synthetic contaminant, this is diluted by the stirring means (M111) to obtain contaminated water in a homogenous solution. A chemical reagent may then be added, and it is dissolved by the stirring means (M111). The aeration pump (P112) does also promote dissolution. They are both controlled by electronic means and promote the chemical process, allow to optimize the reaction between contaminant and reagent and the consequent formation of residues resulting from the reaction. A second valve (V104) may be open so that the treated or pretreated water may flow into a water outlet of the station (X102). The station may include a fifth valve (V105), which controls the passage of pretreated water to the water outlet of the station (X102). The deposited residues may exit through the lower portion of the second reservoir (B102) as a residues discharge from the station (B103) depending on the opening of a third valve (V103). An overflow control member (Overflow) is arranged inside the second reservoir (B102) and connected to a third water outlet (Overflow) such that, when the water inside the second reservoir (B102) reaches a predefined volume, it enters the overflow control member and leaves through the third water outlet (B102). The outflow of treated or pretreated water is performed in a side section of the second reservoir (B102).

### DETAILED DESCRIPTION

The station of the present disclosure defines a miniaturized system, which may be movable, to digitally monitor and control de water treatment. Monitoring and control can be in real time with augmented reality.

The station allows for the treatment of waters contaminated by oxidation-reduction. As already mentioned, the water may be demineralised water to which a contaminant is added, and this contaminant may be synthetic.

For such purpose, the station shall comprise at least two reservoirs suitable for holding liquids, a first reservoir (B101) having at least one water inlet and one water outlet and a second reservoir (B102) with at least one water inlet and one water outlet, the water outlet being formed in a side section of the second reservoir (B102).

The second reservoir (B102) further comprises a residues outlet which is formed in the lower section thereof of the second reservoir and is suitable for the removal of residues deposited at least by gravitational action. The water outlet in the first reservoir (B101) is connected to the water inlet of the second reservoir (B102) and the water outlet of the second reservoir (B102) is connected to a water outlet of the station (X102).

Thus, a circuit is formed wherein the water is pumped from the first reservoir (B101) to the second reservoir (B102). Thus, the outlets of the second reservoir (B102) are:
one water outlet, for the outflow of water treated for contaminants, which allows the water to flow out of the station (X102), and
a residues outlet, from which is extracted the residues resulting from a reaction induced inside the second reservoir (B102) and which generates residues sedimentation.

The station comprises a first valve (V102) and a first pump (P110).

The first valve (V102) - for instance, a solenoid valve - is controllable and allows the water to flow from the first reservoir (B101). On the other hand, the first pump (P110) is also controllable and allows the water inside the first reservoir (B101) to be pumped into the second reservoir (B102).

When the first valve (V102) is open, the action of the first pump (B101) allows the said pumping, which is performed from the outlet of the first reservoir (B101) into the second reservoir (B102) through the entry of water in the second reservoir (B102). This configuration allows the water to pass from the first reservoir (B101) to the second reservoir (B102).

The station further comprises a second valve (V104). The second valve (V104) is also controllable, and allows for the water to flow from the second reservoir (B102) through the second outlet and, hence, into the water outlet of the station (X102). The opening of the second valve (V104) may, therefore, occur when the reaction of removing a contaminant in the water is finished and a resulting product has sedimented.

Each of the reservoirs has a capacity between 4 and 50 I, optionally 4 and 15 I, optionally 6 and 9 I.

It is thus possible to operate the station to be fed with demineralised water from the first reservoir, allowing a solid and equal basis for the whole experience and research. The first reservoir (B101) and/or the second reservoir (B102) can be graduated.

This station allows for, in the main reservoir- the second reservoir (B102) -, the placement of synthetic samples and the addition of chemical reagents, each by means of an independent separating funnel connected to the second reservoir (B102) or directly in the second reservoir (B102), according to the water and wastewater parameters, recreating the real procedures in water treatments, namely in reducing contaminants containing iron, manganese and other ions that may be present in the water, both in suspended and in dissolved form .

Throughout its process, the station also allows water turbidity to be read using portable equipment collected through an auxiliary hole.

The station provides viewing the formation, growth and decantation of flocs resulting from the reaction, as well as the behaviour of flocs influenced by the speed of stirring means (M111) - e.g., an electromechanical stirrer with Servo Drive -, as a real process of learning.

The station comprises a third controllable valve (V103), which can be controllable by electronic means, and which allows for the discharge of residues deposited in the lower section of the second reservoir - the bottom of the second reservoir - through the residues outlet (Sludge Drain) and towards a water outlet of the station (B103). The opening of the third valve (V103) may, thus, occur after the opening of the second valve (V104) for the water treated for contaminants to flow out, after the removal reaction of a contaminant in water has finished and a resulting product has sedimented.

A first drain outlet (X101) is connected to the outlet of the first reservoir (B101), and a fourth controllable valve (V101), which can be controlled by electronic means, allows water to flow from the outlet of the first reservoir (B101) to the first drain outlet (X101).

The first valve (V102) can be opened allowing water to drain between the first reservoir (B101) and the second reservoir (B102) to the drain outlet (X101).

The station can include means to determine the water volume inside the first reservoir (B120). The station can be configured to stop the operation of the first pump (P110) when the value obtained by the means to determine the water volume inside the first reservoir (B101) is null or near null. The station may be configured to maintain the operation of the first pump (P110) when the value obtained by the means to determine the water volume inside the first reservoir (8101) is greater than or equal to a predefined value.

The station can comprise a flow meter (B121). The station can be configured to stop the operation of the first pump (P110) when the value obtained by the flow meter (B121) is greater than or equal to a predefined value. The station may be configured to maintain the operation of the first pump (P110) when the value obtained by the flow meter (B121) is less or equal to a predefined value. As an example, the predefined value may correspond to a maximum volume, such maximum volume corresponding to a total volume of the second reservoir (B102) or to a pre-established volume to carry out an experiment in the second reservoir (B102).

In an embodiment, the second reservoir (B102) - which may be considered a main tank - downstream of the first reservoir (B101) - which may be considered a feeding tank - is equipped with stirring means (M111) which may consist in an electromechanical stirrer with dynamic control by servo motor with adjustment of the blades angle.

By containing mechanical stirring means, controllable by electronic means and arranged inside the second reservoir, these operate as a facilitator for a chemical process to be performed inside the second reservoir (B102), e.g., a process wherein a contaminant and a reagent react by chemical oxidation, generating flocs that sediment at the bottom of the reservoir by gravitational action. Such a reaction and consequent formation of reaction product, are both optimised by the operation of the stirring means.

The stirring means (M111) may be rotative, their rotation speed being controllable by electronic means. The rotation may correspond to
a rotation by rapid stirring, between 100 and 250 rpm,
a rotation by moderate stirring, between 30 and 99 rpm
   and/or
a rotation by slow stirring, between 10 and 29 rpm.

The stirring means (M111) can also have blades with a tilt between 35 a 55°, in relation to a rotation axis of the rotation means, such a tilt promoting the oxidation and precipitation of the resulting product. The tilt can also be controllable by electronic means.

In an embodiment, the station comprises an aeration pump (P112) arranged inside the second reservoir (B102) such that when the water is inside, the air contacts the water. The aeration pump (P112) promotes oxidation by oxygenating the water, and does also prevent the growth of anaerobic bacteria, which need low oxygen environments to survive.

It can further comprise a pH meter (B123) arranged inside the second reservoir (B102) such that when water is inside, it is able to measure the pH of water. The second reservoir (B102) is, thus, equipped with an online measuring block to carry out the preliminary analysis of the water characteristics, such as pH and free chlorine, where the process of oxidation-reduction occurs, followed by the decantation process.

The station can further comprise one overflow control member and one second drain outlet (Overflow). Thus, thee second reservoir (B102) comprises a third water outlet. The overflow control member is arranged inside the second reservoir (B102) and connected to this third water outlet, such that when the water inside the second reservoir (B102) reaches a predefined volume, it enters the overflow control member and exits through the third water outlet into the drain outlet (Overflow). Thus, the overflow control member provides an additional measure to prevent the water that enters in the second reservoir (B102) exceeds a predefined level corresponding to the said predefined volume.

The station of the present disclosure can comprise one or more controllers that include computation means configured to control elements such as valves, pumps and/or stirring means. It can also obtain monitoring data obtained from the said sensors.

The present disclosure can also comprise one system including the station of the present disclosure and remote or local controller. The remote or local controller can be configured to allow the access to a human-machine interface (HMI) that allows to activate control commands from the station of the present disclosure, through human action and/or automatically.

Consequently, the station can be controlled automatically through software, as if it were a treatment station, but also individually, making room for scientific development and research into better processes, methods and best practices.

This controller, configured with a controlling software, does also have the ability to collect data, allows for parameterisation and activation of all the elements in the station, and these can be viewed in a schematic or 3D form, according to predefined representation standards.

Data collection allows direct intervention to improve the process in real time or can be used in conjunction with Machine Learning.

This station can, therefore, be equipped with a set of online sensors and actuators to allow the control of the continuous process, as well as the analysis of the preliminary characteristics of hard water and final of treated water, such as pH, conductivity and free chlorine.

Each sensor or actuator is unstable in one face of a corresponding reservoir, for instance, in a side face or in an upper face. The upper face may be formed by a reservoir lid, therefore removable from the reservoir.

The elements of the plant of the present disclosure, such as reservoirs, inlets and outlets, pumps or valves, can be connected by tubes and corresponding coupling members. These tubes and corresponding coupling members can be standardised.

The tubes, sensors, actuators and fixing brackets, may be coupled by quick-connect coupling members, allowing easy configurations, without the help of special tools and intended to also provide extended competences both in learning and research.

The method for the water treatment of the present disclosure consists in a method to treat water in the water treatment station of the present disclosure.

The method comprises the following steps:
- add water, optionally demineralised water, to the first reservoir,
- open the water outlet in the first reservoir and pump water into the second reservoir,
- add at least one contaminant to the water pumped into the second reservoir, thus obtaining contaminated water,
- add at least one reagent to the contaminated water, the mixture thus inducing a reaction, as a reaction of oxidation-reduction,
- wait for the settlement of residues present in the initial solution at the bottom of the first reservoir,
- open the water outlet of the second reservoir and obtain water treated for contaminants at the water outlet of the station.

The method can further include the determination of the water volume contained inside the first reservoir (B101). The water pumping can be performed based on the determined water volume inside the first reservoir (B101). The pumping of the first pump (P121) can stop when the determined water volume inside the first reservoir (B101) is null or close to null. The pumping of the first pump (P121) can be maintained when the determined value is greater than or equal to a predefined value.

The method can additionally include the determination of a water flow between the first reservoir (B101) and the second reservoir (B102), and the water pumping can be performed based on that determined flow. The first pump (P121) can stop the pumping when the determined flow value for a period of time is greater than or equal to a predefined value. The first pump (P121) can maintain the pumping when the determined flow value for a period of time is lower than or equal to a predefined value. As an example, the predefined value can correspond to a maximum volume, such maximum volume corresponding to a total volume of the second reservoir (B102) or to a pre-established volume to carry out and experiment in the second reservoir (B102).

As a method for the treatment of waters in the water treatment station of the present disclosure, it may, specifically, include the following steps:
- add demineralized water to the first tank (B101) as a solid and neutral basis for the experiments to be performed,
- open the water outlet in the first reservoir (B101) and pump the water into the second reservoir (B102), in the right amount and programmed according to the experiment to be performed,
- activate or not, the aeration pump (P112),
- activate and regulate the mechanical stirrer (M111) according to experience and research to ensure the homogenisation of the contaminant added in the next step,
- add a synthetic sample (contamination),
- add a chemical reagent,
- regulate the mechanical stirrer (M111) according to the reagent,
- wait for the oxidation process of the occurring residues deposition at the bottom of the second reservoir (B102),
- open the water outlet of the second reservoir (B102) to obtain pretreated water at the water outlet of the station,
- open the outlet for the residues deposited on the lower portion of the second reservoir (B102),
- analyse the pretreated and collected water from the second reservoir (B102), and/or
- analyse the collected residues.

Thus, the station and the method of the present disclosure enable the formation and or experimentation of the following activities:
- Speed control of electric motors, in the oxidation-reduction process, according to the international standard.
- Level measurement using different types of sensors.
- Control of continuous processes and process energy efficiency.
- Excessive energy consumption and countermeasures.
- Efficiency of electric actuators.
- Causes of turbidity in water.
- Growth control of anaerobic bacteria by aeration and/or chlorination
- Analysis of the factors affecting sedimentation.
- Analysis and quantification of turbidity before and after the process.
- Standard oxidation-reduction and sedimentation process.
- Analysis of symbology and DTI scheme according to EN 62424:2010-01 and ISO 10628.

In one example, the station of the present disclosure may include:
- two or more transparent water tanks with a 7 litres capacity to allow the viewing of experiments, with no influence on learning, with a connection interface and holes to collect samples,
- sensors,
- actuators,
- water aeration pump,
- fittings, fastening and pipework with quick connections,
- electromechanical stirrer with adjustable blades, with regard to the tie rod and angle of attack, equipped with a speed control drive, according to the experiences and to the mixture of synthetic samples and reagents,
- hardware-based online measuring block, with a pH sensor equipped with a compatible I/O interface,
- portable measuring equipment for the analysis of pH, conductivity, free and total chlorine, colour and turbidity,
- chemical reagents developed to guarantee the stoichiometric quantities for synthetic samples,
- Process control device, data collection and Internet of Things (IoT).

Synthetic samples, comprising contaminants and reagents based on the principles of oxidation-reduction, may be associated to the station and to the method of the present disclosure for the implementation thereof. These are parameterised to represent waters, waste waters and industrial processes like textiles and metallurgy.

In several embodiments, the station, the method, and/or the elements thereof, include components to execute at least some of the examples of resources and features of the methods described, either by means of *hardware* components (like memory and/or processor), *software* or any combination thereof.

In several embodiments, a station controller may consist in or comprise a microcontroller, with the ability to receive external data through inputs and provide triggers for outputs, based on configured rules and/or predefined programming.

An article for use with the station and/or the method, as a prerecorded storage device or other similar computer-readable means, including program instructions recorded therein, or a computer data signal carrying computer-readable programme instructions, can direct a device to facilitate the implementation of the methods described herein. It is understood that such devices, manufacturing items and computer data signals are also within the scope of the present disclosure.

A "computer-readable means" stands for any means that is likely to store instructions to be used or executed by a computer or any other computation device, including a server, a read-only memory (ROM), an erasing programmable read-only memory (EPROM) or a flash memory, a random access memory (RAM), a portable disk, a hard disk drive (HDD), a solid-state storage device (e.g. NAND flash or synchronous dynamic RAM (SDRAM)) and / or an optical disk, as a *Compact Disk* (CD), *Digital Versatile Disk* (DVD) or Blu-Ray ^{™} *Disk.*

As will be clear to the person skilled in the art, the present disclosure should not be limited to the embodiments described herein, and various changes are possible which remain within the scope of the present disclosure.

Naturally, the embodiments presented above may be combined, in the different possible forms, and repetition of all these combinations is avoided herein.

## Claims

1. A miniaturized water treatment station, the station comprising at least two reservoirs suitable to contain liquids, a first reservoir (B101) and a second reservoir (B102), wherein:
the first reservoir (B101) comprises at least one water inlet and one water outlet,
the second reservoir (B102) comprises at least one water inlet and one water outlet, the water outlet being formed on a side section of the second reservoir, and further comprising a residues outlet, the residues outlet being formed in a lower section of the second reservoir and being suitable to remove the residues deposited at least by gravitational action,
the water outlet of the first reservoir (B101) is connected to the water inlet of the second reservoir (B102), and wherein the water outlet of the second reservoir (B102) is connected to one water outlet of the station (X102),
the station comprises a first valve (V102) and a first pump (P110), the first valve (V102) being controllable and allowing the water to flow out of the first reservoir (B101), and the first pump (P121) being controllable, a pumping from the first pump (P121) being performed from the outlet of the first reservoir (B101) to the second reservoir (B102) through the water inlet of the second reservoir (B102), and the station further comprising a second valve (V104), the second valve (V104) being controllable and allowing the water to flow out of the second reservoir (B102) through the second outlet and to the water outlet of the station (X102), wherein each of the reservoirs (B101, B102) has a capacity between 4 and 50 I.

2. A station according to the previous claim, wherein it is configured such that the opening of the second valve (V104) occurs when the reaction of removing a contaminant in the water is finished and a resulting product has sedimented.

3. A station according to the previous claim, further comprising a third valve (V103), the third valve (V103) being controllable and allowing the discharge of residues deposited at the bottom of the second reservoir (B102) through the residues outlet into a residues outlet of the station (B103).

4. A station according to the previous claim, wherein it is configured such that the opening of the third valve (V103) occurs after the opening of the second valve (V104) for the water treated for contaminants to flow out, after the removal reaction of a contaminant in water has finished and a resulting product has sedimented.

5. A station according to any of the preceding claims, the station further comprising a first drain outlet (X101) and a fourth valve (V101), the first drain outlet being connected to the outlet of the first reservoir (B101), the fourth valve (V101) is controllable and allows the water to flow out through the outlet of the first reservoir (B101) into the first drain outlet (X101).

6. A station according to any of the preceding claims, wherein the water outlet is formed in a lower section of the first reservoir (B101).

7. A station according to any of the preceding claims, wherein it further comprises means to determine the water volume inside the first reservoir (B101) and, optionally, the means to determine the water volume inside the first reservoir (B101) include a level sensor (B120) arranged at the outlet of the first reservoir (B101) and are configured to determine the water hydrostatic pressure inside the first reservoir (B101), determining the water volume inside the first reservoir (B101), based on a hydrostatic water pressure value obtained by the level sensor (B120) and, optionally, the station is configured for the first pump (P121) to pump water according to at least a value obtained by the means to determine the water volume contained inside the first reservoir (B101).

8. A station according to the previous claim, wherein it further comprises a flow meter (B121) arranged between the first reservoir (B101), and the second reservoir (B102), the first pump (B121) being configured to pump water according to at least a value obtained by the flow meter (B121).

9. A station according to any of the preceding claims, wherein it further comprises:
an aeration pump (P112) arranged inside the second reservoir such that, when there is water inside the second reservoir, the air contacts the water,
and/or
a pH meter (B123) arranged inside the second reservoir such that, when there is water inside, it is able to measure the pH of the water.

10. A station according to any of the preceding claims, wherein the station further comprises mechanical stirring means (M111), controllable by electronic means and arranged inside the second reservoir (B102) as a facilitator for a chemical process to be performed inside the second reservoir (B102).

11. A station according to the previous claim, wherein the stirring means (M111) is rotative, its rotation speed is electronically controllable and, optionally, the stirring means (M111) has blades with a tilt between 35 and 55° in relation to a rotation axis of the rotation means.

12. A station according to any of the preceding claims, further comprising an overflow control member and a second drain outlet (Overflow), and wherein the second reservoir (B102) comprises a third water outlet, the overflow control member is arranged inside the first reservoir (B102) and is connected to the third water outlet, such that, when the water inside the second reservoir (B102) reaches a predefined volume, it enters the overflow control member and exits through the third water outlet to the second drain outlet (Overflow).

13. A station according to any one of the preceding claims, wherein each valve is electronically controllable.

14. A station according to any one of the preceding claims, wherein the first reservoir (B101) and the second reservoir (B102) are installed in at least one bench, such bench being movable, optionally through wheels installed on a lower face of the bench.

15. A method for the treatment of water in the water treatment station of any of the previous claims, the method comprising the following steps:
• Add water to the first reservoir,
• open the water outlet of the first reservoir (B101) and pump water into the second reservoir (B102),
• add at least one contaminant to the water pumped to the second reservoir (B102), obtaining contaminated water,
• add at least one reagent to the contaminated water obtaining a mixture, the mixture thus inducing a reaction like an oxidation-reduction reaction and forming residues,
• wait for the deposition of residues resulting from the reaction at the bottom of the second reservoir (B102),
• open the water outlet of the second reservoir (B102) and obtain water treated for contaminants at the water outlet of the station.

16. A method for the treatment of water according to the previous claim wherein water added to the first reservoir is demineralised water.

17. A method for the treatment of water according to any of the claims 15-16 in the water treatment station of claim 3, further comprising a third valve (V103), the third valve (V103) being controllable and allowing the discharge of residues deposited in the lower section of a second reservoir (B102), through the residues outlet of the station and, optionally, the method does yet comprise the step of, after opening the water outlet of the second reservoir (B102) and obtaining water treated for contaminants at the outflow of water from the station, opening the third valve (V103), allowing the discharge of the residues deposited in the lower section of the second reservoir (B102) through the residues outlet of the station (B103).

18. A method for water treatment according to any of the claims 15-17 in the water treatment station of claim 7 wherein it further includes the established water volume inside the first reservoir (B101) and, optionally, the water volume contained inside the first reservoir (B101) is obtained based on the establishment of the hydrostatic water pressure inside the first reservoir (B101), for instance, based on a level sensor (B120) arranged at the outlet of the first reservoir (B101) and, optionally, the water pumping is performed based on the determined volume of the water inside the first reservoir (B101).
